# EUROPEAN PATENT SPECIFICATION

(11) **EP 3 273 053 B1**
(45) Date of publication and mention of the grant of the patent: **02.03.2022**
(21) Application number: 16180363.0
(22) Date of filing: 20.07.2016
(51) Int. Cl.: F03D 1/06

(54) **ROTOR BLADE WITH STRUCTURAL ELEMENTS INSIDE**
ROTORBLATT MIT STRUKTURELEMENTEN IM INNERN
PALE DE ROTOR COMPORTANT DES ÉLÉMENTS STRUCTURAUX INTÉRIEURS

(43) Date of publication of application: 24.01.2018
(73) Proprietor: Siemens Gamesa Renewable Energy A/S, 7330 Brande (DK)
(72) Inventor: Couturier, Philippe, Oakville, Ontario L6J 7V9 (CA)
(74) Representative: Aspacher, Karl-Georg

(56) References cited:
- DE-A1-102011 102 252
- US-A1- 2011 116 927
- US-A1- 2011 206 529
- US-A1- 2011 223 021

## Description

The present invention relates to a rotor blade of a wind turbine being able to sustain extreme aerodynamic loads better than existing rotor blades. Furthermore, the invention relates to a wind turbine comprising at least one such rotor blade.

The invention addresses the problem of extreme aerodynamic loads which may be experienced by rotor blades of a wind turbine. Such extreme aerodynamic loads may result in fatigue damage of the rotor blade, displacement of the tip of the rotor blade or even buckling of the rotor blade. Displacement of the tip of the rotor blade is a serious issue as this may eventually lead to a collision of the tip of the rotor blade with the tower of the wind turbine. Buckling of the rotor blade is generally irreversible and leads to an emergency shutdown of the wind turbine and costly repair works of the wind turbine.

In the context of this patent application, extreme aerodynamic loads are understood as aerodynamic loads acting on the rotor blade which are significantly higher than loads seen during normal operating conditions. Extreme aerodynamic loads can be caused by wind gusts, high turbulence, or rapidly changing wind directions.

Until now, two main approaches have been proposed and followed when dealing with extreme aerodynamic loads on rotor blades. First, there exist a variety of active methods, such as hydraulically or electrically actuated flaps. These actuated flaps are often times arranged at or close by the trailing edge of the rotor blade. A drawback of these active methods is the complexity of the systems and the challenge to design and manufacture these systems such that they desirably work over many years during harsh conditions. Their outboard location in the blade also brings in challenges regarding possible maintenance work.

A second conventional approach to alleviate extreme aerodynamic loads on a rotor blade of a wind turbine are passive methods such as structural tailoring of the rotor blade which results in so called aeroelastic tailored blades. A drawback of this approach is the need to introduce sweep in the blade or off-axis fibers which bring in transportation and manufacturing challenges.

Prior art is disclosed, for example, in US 2011/116927 A1, US 2011/223021 A1, and DE 10 2011 102252 A1.

Therefore, there is the desire to provide a concept to alleviate extreme aerodynamic loads on a blade of a wind turbine in an improved manner.

This object is solved by the independent claim. Advantageous embodiments and modifications are disclosed in the dependent claims.

According to the invention, there is provided a rotor blade of a wind turbine, comprising an airfoil portion with a cavity delimited by a first side and a second side. The rotor blades comprises a first structural element, which is rigidly connected to the inner surface of the first side. The rotor blade furthermore comprises a second structural element, which is movably connected to the inner surface of the second side. Both the first and the second structural element are movably connected to each other. Finally, the first and second side are configured such that the respective shapes are modifiable depending on a movement of the second structural element relative to the first structural element.

Note that the "first side" and "second side" are not used in a geometrical sense as lines or surface areas. Instead, the first and second side represent components, i.e. parts, of the inventive rotor blade.

For instance, in the case of a modern-type rotor blade with a shell structure, the first and second sides are advantageously portions of the shell of the rotor blade. Then, the "first side" may be interpreted as a "first shell portion" of the rotor blade, and the "second side" may be interpreted as a "second shell portion" of the rotor blade.

As to a lift enhancing airfoil profile a pressure side and a suction side can typically be assigned, in certain embodiments of the invention, the first shell portion may represent the pressure side portion and the second shell portion may represent the suction side portion.

Note that the wording "shell portion" and the division of the rotor blade into a pressure side shell portion and a suction side shell portion does not mean that these shell portions are physically separate. They can be represented by a pressure side half shell and a suction side half shell which are connected, i.e. by an adhesive bond, i.e. during the manufacturing process of the rotor blade. However, there also exist rotor blades with only one shell, which are also known as integral blade approaches. In this case, the pressure side shell portion and the suction side shell portion are only virtual divisions of the one and only shell.

The structural elements are arranged inside the rotor blade, which is designed as a hollow body, i.e. comprising a cavity. In other words, the first and second structural elements are arranged in the cavity of the rotor blade. These structural elements are arranged and prepared to be able to move with regard to each other under extreme aerodynamic loads.

It is noted that under extreme aerodynamic loads, a rotor blade of a wind turbine performs flapwise bending. Flapwise bending is understood as a movement of the elongated rotor blade towards the pressure side and/or the suction side.

As is it known from general physics, bending of a beam tends to ovalize the beam. This general technical effect is referred to as the Brazier effect. As the hollow-shaped, elongated rotor blade of a wind turbine has considerable similarities with an abstractly defined beam, it is not surprising that ovalization also occurs in rotor blades of a wind turbine when they are exposed to extreme aerodynamic loads.

This ovalization of the rotor blade is generally undesired. However, a main and important aspect of the present invention is that this ovalization is actually used and benefited to cause a modification of the shape of the rotor blade. In particular, the shell of the rotor blade or at least portions thereof are shape-modified by the Brazier effect. By means of a wisely designed arrangement of the first and the second structural element inside the rotor blade, it can be realized that the shape of the rotor blade is modified such that load on the rotor blade and related components of the wind turbine is alleviated.

In other words, the inventive concept relates to the fact that by using the Brazier effect the aerodynamic profile of at least a section of the rotor blade is changed such that the resulting (modified) aerodynamic profile comprises a lower lift coefficient. As a decreased lift coincides generally with a decreased load on the respective profile of the blade, the load, i.e. stress of the rotor blade is alleviated. Advantageously, the first and second structural elements are arranged in the outer third or outer half of the rotor blade. In this context, "outer half" is to be understood as the radially outwardly defined part of the rotor blade, i.e. the part around the tip of the rotor blade.

According to the invention, the second structural element is attached to the inner surface of the second side in such a manner that it is able to perform a pivoting movement.

In other words, the second structural element is generally movably connected to the inner surface of the shell of the rotor blade and in particular it is pivotable arranged.

In yet other words, a hinge mechanism may be used to connect the second structural element with the pressure or suction side shell portion, respectively.

According to the invention, due to the movement of the second structural element relative to the first structural element, the camber of the rotor blade is reduced when the load on the airfoil portion of the rotor blades is increased.

The camber is defined as the distance of the camber line to the chord line at each chordwise position of the airfoil. In this context, the camber line is defined as the medium position between the suction side and the pressure side at each chordwise position of the rotor blade. Descriptively speaking, the camber of the rotor blade gives an indication regarding the asymmetry of the rotor blade. This is due to the fact that a perfectly symmetric blade with a symmetry axis coincides with the chord line. This would result in a value for the camber of zero at each chordwise position. Comparing a given airfoil profile in an unloaded condition with the same airfoil being ovalized by aerodynamic loads acting on the airfoil, the camber of the airfoil does not significantly change.

However, the inventive rotor blade with its structural elements inside leads to a situation where the camber value which can be seen as a global value representing the various camber values on various chordwise positions, is reduced when the blade is subject to a large external force.

As an effect, due to the reduced camber value, the lift enhanced load on the rotor blade, in particular of the aerodynamic profile under investigation, is reduced. Therefore, the reduction in camber results ultimately in a reduction of the load on the rotor blade.

In another embodiment of the invention, the movement of the second structural element relative to the first structural element is caused, at least among others, by flapwise deflection of the airfoil portion of the rotor blade.

As mentioned already, extreme aerodynamic loads typically lead to a flapwise deflection of certain sections of the rotor blade. Therefore, it can be said that these flapwise deflection may be seen, at least among others, as the reason for the movement of the second structural element relative to the first structural element.

The movable connection of the first and second structural element is exemplarily made of a joint which is substantially made of steel.

An advantage of the metal joint, in particular a steel joint, is its robustness and its capability to sustain large forces acting on it.

In another embodiment of the invention, the first structural element and/or the second structural element are arranged at the trailing edge of the rotor blade.

An advantage of arranging and providing at least one of the two structural elements at the trailing edge section of the rotor blade is that a desired shape modification of the blade shell portions is also at or close to the trailing edge of the rotor blade.

In other words, it is preferred that the structural elements are placed in a region which is spaced apart with a specific distance from the (shear) web and other important structural elements being substantially centrally located inside the rotor blade.

In another embodiment of the invention, the first structural element is rigidly connected to the first side by means of an extended glue line section.

An advantage of such an extended glue line section is that a high stability and reliability of the connection between the first structural element and the first side can be ensured. This is important as considerable loads and forces are expected regarding the connection area between the first structural element and the first side of the rotor blade.

In another embodiment of the invention, the first structural element is rigidly connected to the inner surface of the first side during manufacturing of the pressure and suction side portion, respectively, in particular during a vacuum existed rapid thermal molding process.

The advantage of integrating the connection of the first structural element with the first side is that by this measure a highly stable and robust joint between the first structural element and the first side can be realized.

Vacuum assisted rapid thermal molding (VARTM) process is a commonly used and high stability process when manufacturing the blade shell or blade shell portions of a rotor blade.

Alternatively, the first structural element may also be connected to the respective shell portion after manufacturing of the respective shell portion. This has the advantage that the existing process of manufacturing the rotor blade does not need to be changed because of the insertion of the structural elements.

Another embodiment of the invention is that the first structural element is rigidly connected to the inner surface of the pressure side shell portion and the second structural element is consequently connected movably to the inner surface of the suction side shell portion.

Note that in principle also the other option of connection rigidly the first structural element to the suction side shell portion and movably connecting the second structural element to the pressure side shell portion is possible. However, during typical extreme aerodynamic loads it is desired to move the trailing edge and more generally to modify the shape of the shell of the rotor blade in such a way that the trailing edge is moved up towards the suction side of the airfoil portion. Therefore, a rigid connection of the first structural element to the pressure side shell portion and a movable connection of the second structural element to the suction side shell portion if preferred.

Finally, the invention is also directed towards a wind turbine for generating electricity, wherein the wind turbine comprises at least one rotor blade as described in one of the embodiments above.

The invention is now described, by way of example only, by means of the accompanying drawings, of which:
- Figure 1: shows a rotor of a wind turbine;
- Figure 2: shows a cross sectional view of the airfoil portion of one embodiment of an inventive rotor blade;
- Figure 3: shows the ovalization of the airfoil portion of a prior art rotor blade;
- Figure 4: shows an ovalization of an airfoil portion of a rotor blade according to the invention;
- Figure 5: shows the movement of the trailing edge section of a rotor blade according to the invention;
- Figure 6: shows another embodiment of the invention comprising an extended glue line section; and
- Figure 7: shows the effect of the inventive concept on the lift coefficient of the rotor blade.

The illustration in the drawings is schematically. Note that similar features and elements are denoted by the same reference signs.

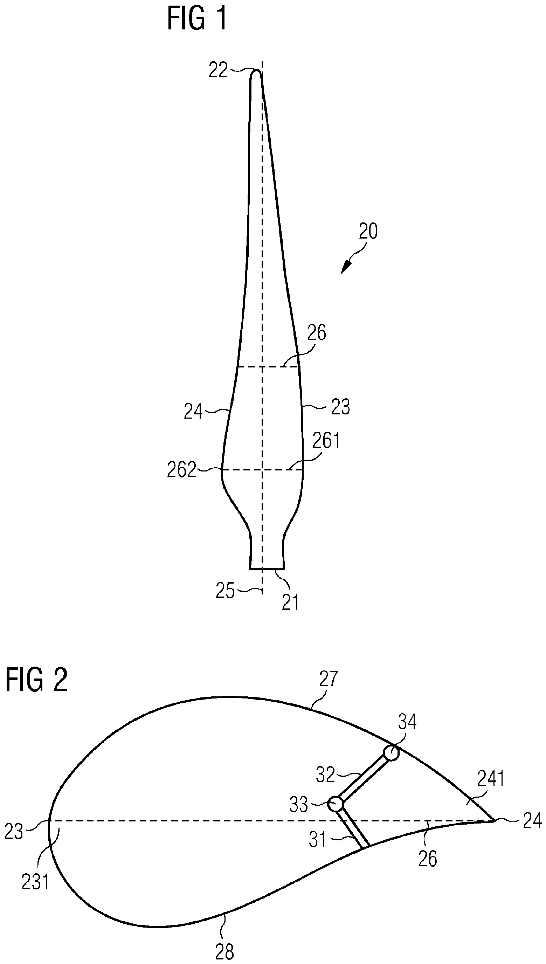

Figure 1 shows a top view on a rotor blade 20. The rotor blade 20 comprises a root 21 and a tip 22. Furthermore, the rotor blade 20 comprises a leading edge 23 and a trailing edge 24. A span 24 can be assigned to the rotor blade 20. The span 24 is understood as the virtual line in lengthwise direction of the rotor blade 20. In the case of a wind turbine with pitchable blades, the span 25 coincides with the pitch axis of the rotor blade. In general, the span 25 can also be described as the line which is perpendicular to the cross section of the rotor blade at the root 21. In the case of a straight rotor blade, the span 25 intersects both the root 21 and the tip 22. In the case of a slightly swept rotor blade, as illustrated exemplary in Figure 1, the span 25 does not exactly intersect the tip 22 of the rotor blade 20.

The rotor blade 20 is also characterized by a plurality of chords 26 which represent the lines connecting the leading edge 23 with the trailing edge 24 and being perpendicular to the span 25. Consequently, at each spanwise position between the root 21 and the tip 22 of the rotor blade 20, a chord can be assigned. The chord 26 with the maximum length is referred to as the maximum chord 261. The area at the rotor blade where the maximum chord 261 is located is referred as to the shoulder 262.

Figure 2 shows a cross sectional view of the rotor blade at a certain spanwise position. Note that, coming back to Figure 1, an airfoil portion 29 can also be assigned to the rotor blade 20. The airfoil portion 29 is defined as that area of the rotor blade which extends from the shoulder 262 to the tip 22. The airfoil portion 29 typically has a profile which is able to generate lift if surrounded by an airflow flowing from the leading edge section 231 to the trailing edge section 241.

This can be seen more clearly in Figure 2. Figure 2 is a cross sectional view of the rotor blade at a certain spanwise position in the airfoil portion 29 of the rotor blade 20. In this cross sectional view the chord 26 which connects the leading edge 23 with the trailing edge 24 can be seen. Furthermore, a leading edge section 231 and a trailing edge section 241 can be defined. The leading edge section 231 refers to that section of the rotor blade which extends from the leading edge 23 until 10% in chordwise distance away from the leading edge 23 towards the trailing edge 24. In other words, the leading edge section 231 is referred to as the area which surrounds the leading edge 23.

Likewise, the trailing edge section 241 is defined as that area or section of the rotor blade which extends from 90% chord length as measured from the leading edge 23 towards the trailing edge 24. Thus, the trailing edge section 241 corresponds to that section of the rotor blade which surrounds the trailing edge 24. In the cross sectional view as illustrated in Figure 2, there can be distinguished a suction side shell portion 27 and a pressure side shell portion 28. The suction side shell portion 27 is defined as that surface of the airfoil profile which is on one side between the leading edge 23 and the trailing edge 24, while the pressure side shell portion 28 is defined as the opposite fraction of the surface.

In Figure 2, the suction side shell portion 27 is at the top, while the pressure side shell portion 28 is at the bottom.

Although the two surface regions are referred to as the suction side shell portion and the pressure side shell portion, these two surface portions may well be configured as one continuous surface. In other words, although both shell portions may refer to two separate half shells, this is not necessarily required.

Figure 2 also illustrates the first structural element 31 and the second structural element 32 which are arranged in the hollow cavity 29 inside the rotor blade. In other words, the first structural element 31 and the second structural element 31 are both attached to the respective shell portions 27, 28 at their respective inner surfaces. While the first structural element 31 is rigidly connected to the pressure side shell portion 28, the second structural element 32 is movably connected to the suction side shell portion 27. This movable connection is realized by a hinge 34.

Both structural elements, i.e. the first structural element 31 and the second structural element 32, are connected with each other by a joint 33. The joint 33 enables a movement, i.e. a relative rotation, between both structural elements 31, 32.

These structural elements 31, 32, the joint 33 and the hinge 34 extend at a certain spanwise extension at the inner cavity of the rotor blade. Advantageously, they are arranged at that spanwise extension which will yield the best load reduction in the blade.

In other words, it is preferred that the structural elements 31, 32 are provided selectively at these sections of the rotor blade where the load and the lift of the rotor blade shall be influenced.

This may advantageously be the case in the outboard half of the rotor blade. In other words, the structural elements are provided at the radially outward 50% as measured along the span 25 from the root 21 to the tip 22 of the rotor blade. Regarding its chordwise arrangement, the structural elements 31, 32 are preferably attached to the respective inner surfaces of the shell portions at chordwise positions between 70% and 100% chordwise length as measured from the leading edge 23. As an example, the structural elements may even be attached to the shell portions as much backwards as in the trailing edge section 241.

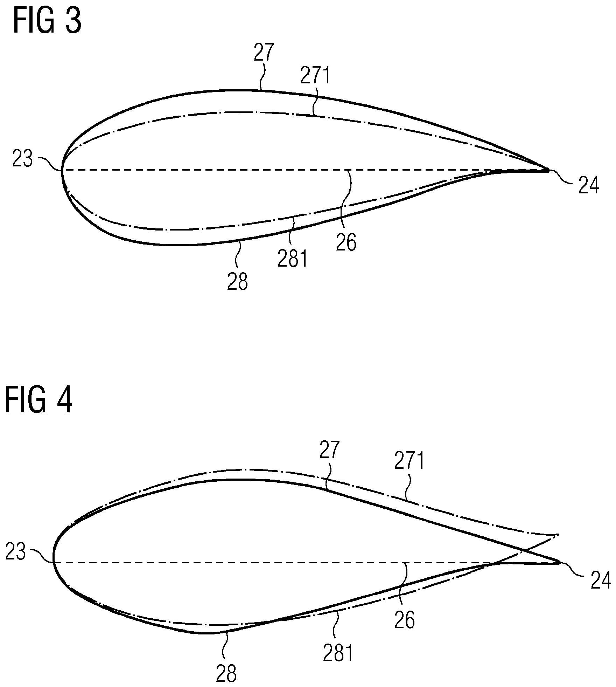

Figures 3 and 4 show the effect of the inventive provision of the structural elements on the airfoil profile of the rotor blade.

Figure 3 shows in solid lines the suction side shell portion 27 and the pressure side shell portion 28 in an unloaded situation. In this context, "unloaded situation" refers to a condition where small or standard forces act on the shell of the rotor blade. In contrast to this unloaded situation, the dash dotted lines represent a modified suction side portion 271 and a modified pressure side shell portion 281. These modified shell portions are present if extreme aerodynamic loading occurs on the airfoil profile. As can be seen, a certain ovalization of the airfoil profile occurs. The thickness of the airfoil, as defined as the distance between the suction side shell portion and the pressure side shell portion, is reduced in a wide chordwise section. However, the camber is kept roughly the same. As a result, a significant change of the lift coefficient of the rotor blade based on the change of the airfoil shell portions is not expected in the conventional scenario as illustrated in Figure 3.

Figure 4 shows the change of the suction side shell portion 27 and the pressure side shell portion 28 to a modified suction side shell portion 271 and a modified pressure side shell portion 281, respectively, if a first and second structural element is provided (not shown in Figure 4).

It can be seen that the result is a change in the shape of the shell which is different to the change occurring in conventional rotor blades as illustrated in Figure 3. Moreover, in particular, the trailing edge section of the airfoil profile changes, namely the trailing edge section and in particular the trailing edge is deflected upwards towards the suction side shell portion under extreme aerodynamic loading of this part of the rotor blade. At this time, the changed or modified blade shell has an effect on the lift coefficient of the rotor blade. Due to a wisely and careful design of the structural elements, the trailing edge section is deflected such that the lift coefficient of the rotor blade is reduced. Therefore load is alleviated and damage of the rotor blade is minimized. It can be seen that there are typically a deflection of the trailing edge and the trailing edge section towards the suction side i.e. away from the pressure side, is able to provide this reduction of lift and load of the rotor blade.

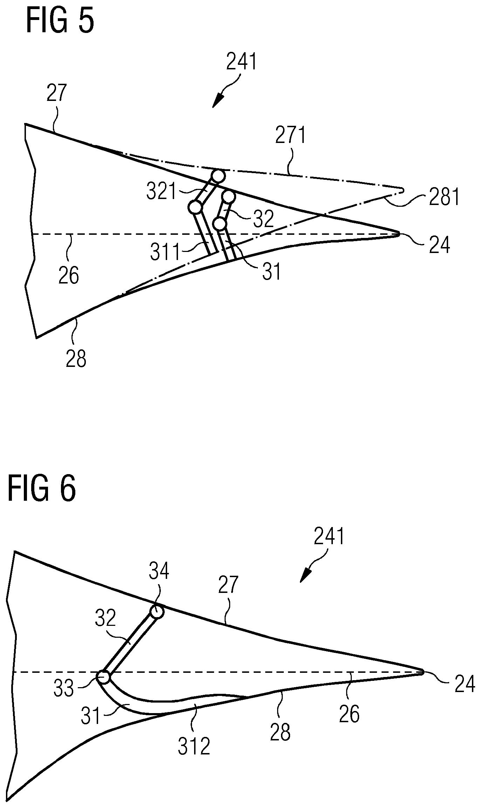

Figure 5 shows a first embodiment focusing on the trailing edge section 241 of the airfoil profile as illustrated in Figure 4. In the unloaded scenario, the airfoil profile at the trailing edge section 241 is again symbolized by solid lines. In the unloaded state, the first structural element 32 is mounted and attached to the inner surface of the pressure side shell portion 28 in a 90° angle. The second structural element 32 is attached and connected movably to the suction side shell portion 27 and comprises an angle of about 110° in the unloaded scenario.

If the trailing edge section 241 of the rotor blade is extremely loaded, the rotor blade tends to bend in flapwise direction. The bending movement translates into forces on the first and second structural element, which results in a different shape of the shell portions. However, as the first structural element is rigidly connected to the pressure side shell portion 28, also the modified first structural element 311 comprises a 90° angle with the modified pressure side shall portion 281. In contrast to that, the modified second structural element 321 which is movably, in particular pivotably connected to the suction side shell, now has a different angle. As an example, now the modified second structural element 328 has an angle of 120° with regard to the modified suction side portion 271. In other words, as the airfoil flattens from the Brazier effect the angle between the structural elements 321 and 311 will reduce. This leads to a shape modification of the blade shell, which leads to a different airflow at the trailing edge section, which leads to a reduction of the lift coefficient which, leads to an alleviation, i.e. to a reduction of the load acting on the rotor blade.

Figure 6 shows a different embodiment, i.e. a variation of the general concept. The embodiment of Figure 6 differs from the embodiment as illustrated in Figure 5 in that the first structural element 31 is connected to the pressure side shell portion 28 by an extended glue line. In other words, it can be said that the first structural element 31 comprises an extended glue line section 312. The advantage of the provision of such an extended glue line section 312 is that a reliable, stiff and rigid connection between the first structural element 31 and the pressure side shell portion 28 is facilitated. This is important, as the connection and the attachment between the first structural element 31 and the pressure side shell portion 28 have to be ensured during situations of extreme aerodynamic loading.

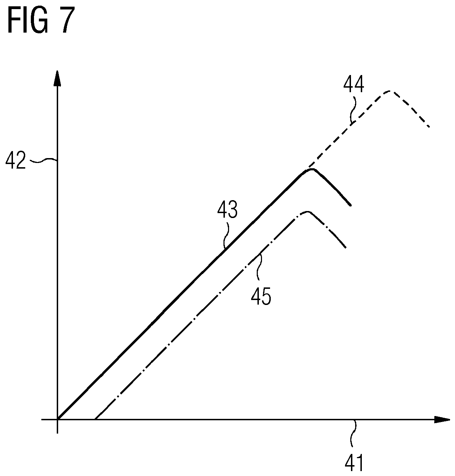

Finally, Figure 7 visualizes the effect of the first and second structural elements 31, 32 on the lift coefficient of the rotor blade.

Figure 7 illustrates the lift coefficient 42 depending on the angle of attack 41. A first curve 43 symbolizes a conventional rotor blade section aerodynamic lift curve under standard loading conditions. It can be seen that the lift coefficient increases with increasing angle of attack, until it reaches a maximum after that the lift coefficient decreases again. The maximum value of the lift coefficient is typically correlated with stall occurring on the rotor blade.

The second curve 44 refers to the same rotor blade as characterized by the first curve 43, however now being exposed to extreme aerodynamic loading. From the natural flattening of the section, the maximum lift coefficient is increased as stall occurrs at a higher angle of attack. The lift coefficients at operating angles of attacks are however not reduced.

Reduction of the lift coefficient is achieved by the inventive concept as it can be seen by the third curve 45. The third curve 45 represents the same rotor blade as for the first and second curve, however, this time including a first structural element and a second structural element being arranged according to the requirements as described above.

This has the effect that, under extreme aerodynamic loading as illustrated in a third curve 45, the lift is reduced at angle of attacks prior to stall. In other words, a desirable shift of the lift curve is achieved by the inventive first and second structural elements being provided in the inner cavity of the rotor blade.

## Claims

1. Rotor blade (20) of a wind turbine,
wherein the rotor blade (20) comprises an airfoil portion (29) with a cavity (291) delimited by a first side and a second side,
wherein
- the rotor blade (20) comprises a first structural element (31), which is rigidly connected to the inner surface of the first side,
- the rotor blade (20) comprises a second structural element (32), which is movably connected to the inner surface of the second side,
- the first and the second structural element (31, 32) are movably connected to each other, and
- the first side and the second side are configured such that the respective shapes are passive modifiable depending on a movement of the second structural element (32) relative to the first structural element (31), wherein
the second structural element (32) is attached to the inner surface of the second side in such a manner that it is able to perform a pivoting movement, wherein
due to the movement of the second structural element (32) relative to the first structural element (31), the camber of the rotor blade (20) is reduced when the load on the airfoil portion (29) of the rotor blade (20) is increased.

2. Rotor blade (20) according to claim 1, **characterized in that** the movement of the second structural element (32) relative to the first structural element (31) is caused at least among others by flapwise deflection of the airfoil portion (29) of the rotor blade (20).

3. Rotor blade (20) according to one of the preceding claims, **characterized in that**
the first and the second structural element (31, 32) are movably connected by means of a joint (33).

4. Rotor blade (20) according to one of the preceding claims, **characterized in that**
the first structural element (31) and/or the second structural element (32) are arranged at the trailing edge section (241) of the rotor blade (20).

5. Rotor blade (20) according to one of the preceding claims, **characterized in that**
the first structural element (31) is rigidly connected to the inner surface of the first side by means of an extended glue line section (312).

6. Rotor blade (20) according to one of the preceding claims, **characterized in that**
the first structural element (31) is rigidly connected to the inner surface of the first side after or during manufacturing of the first side.

7. Rotor blade (20) according to claim 6, **characterized in that**
the first structural element (31) is rigidly connected to the inner surface of the first side during manufacturing of the first side, in particular during a vacuum assisted rapid thermal molding process.

8. Rotor blade (20) according to one of the preceding claims, **characterized in that**
- the first side is at least a portion of the pressure side (28) of the airfoil portion (29), and
- the second side is at least a portion of the suction side (27) of the airfoil portion (29).

9. Rotor blade (20) according to one of the preceding claims,
**characterized in that**
- the airfoil portion (29) comprises a shell defining the contour of the airfoil profile of the airfoil portion (29),
- the first side is a portion of the shell, and
- the second side is another portion of the shell.

10. Wind turbine for generating electricity comprising at least one rotor blade (20) according to one of the preceding claims.

## Patentansprüche

1. Rotorblatt (20) einer Windkraftanlage,
wobei das Rotorblatt (20) einen Tragflügelabschnitt (29) mit einem Hohlraum (291) umfasst, der durch eine erste Seite und eine zweite Seite begrenzt ist,
wobei
- das Rotorblatt (20) ein erstes Strukturelement (31) umfasst, das starr mit der Innenfläche der ersten Seite verbunden ist,
- das Rotorblatt (20) ein zweites Strukturelement (32) umfasst, das mit der Innenfläche der zweiten Seite beweglich verbunden ist,
- das erste und das zweite Strukturelement (31, 32) beweglich miteinander verbunden sind, und
- die erste Seite und die zweite Seite so ausgestaltet sind, dass die jeweiligen Formen in Abhängigkeit von einer Bewegung des zweiten Strukturelements (32) in Relation zu dem ersten Strukturelement (31) passiv modifizierbar sind, wobei
das zweite Strukturelement (32) an der Innenfläche der zweiten Seite derart angebracht ist, dass es in der Lage ist, eine Schwenkbewegung auszuführen, wobei
aufgrund der Bewegung des zweiten Strukturelements (32) in Relation zu dem ersten Strukturelement (31) die Krümmung des Rotorblatts (20) reduziert wird, wenn die Last auf den Tragflügelabschnitt (29) des Rotorblatts (20) erhöht wird.

2. Rotorblatt (20) nach Anspruch 1, **dadurch gekennzeichnet, dass**
die Bewegung des zweiten Strukturelements (32) in Relation zu dem ersten Strukturelement (31) zumindest unter anderem durch eine klappenwärtige Durchbiegung des Tragflügelabschnitts (29) des Rotorblatts (20) verursacht wird.

3. Rotorblatt (20) nach einem der vorhergehenden Ansprüche,
**dadurch gekennzeichnet, dass**
das erste und das zweite Strukturelement (31, 32) mittels eines Gelenks (33) beweglich miteinander verbunden sind.

4. Rotorblatt (20) nach einem der vorhergehenden Ansprüche,
**dadurch gekennzeichnet, dass**
das erste Strukturelement (31) und/oder das zweite Strukturelement (32) an dem Hinterkantenabschnitt (241) des Rotorblatts (20) angeordnet sind.

5. Rotorblatt (20) nach einem der vorhergehenden Ansprüche,
**dadurch gekennzeichnet, dass**
das erste Strukturelement (31) mit der Innenfläche der ersten Seite mittels eines verlängerten Klebelinienabschnitts (312) starr verbunden ist.

6. Rotorblatt (20) nach einem der vorhergehenden Ansprüche,
**dadurch gekennzeichnet, dass**
das erste Strukturelement (31) mit der Innenfläche der ersten Seite nach oder während einer Herstellung der ersten Seite starr verbunden wird.

7. Rotorblatt (20) nach Anspruch 6,
**dadurch gekennzeichnet, dass**
das erste Strukturelement (31) mit der Innenfläche der ersten Seite während einer Herstellung der ersten Seite, insbesondere während eines vakuumunterstützten schnellen thermischen Formungsprozesses, starr verbunden wird.

8. Rotorblatt (20) nach einem der vorhergehenden Ansprüche, **dadurch gekennzeichnet, dass**
- die erste Seite mindestens ein Abschnitt der Druckseite (28) des Tragflügelabschnitts (29) ist, und
- die zweite Seite mindestens ein Abschnitt der Saugseite (27) des Tragflügelabschnitts (29) ist.

9. Rotorblatt (20) nach einem der vorhergehenden Ansprüche, **dadurch gekennzeichnet, dass**
- der Tragflügelabschnitt (29) eine Schale umfasst, die die Kontur des Tragflügelprofils des Tragflügelabschnitts (29) definiert,
- die erste Seite ein Abschnitt der Schale ist, und
- die zweite Seite ein anderer Abschnitt der Schale ist.

10. Windenergieanlage zum Erzeugen von Elektrizität, umfassend mindestens ein Rotorblatt (20) nach einem der vorhergehenden Ansprüche.

## Revendications

1. Pale de rotor (20) d'une éolienne,
dans laquelle la pale de rotor (20) comprend une portion de profil de pale (29) présentant une cavité (291) délimitée par un premier côté et un second côté,
dans laquelle
- la pale de rotor (20) comprend un premier élément structurel (31), qui est raccordé de manière rigide à la surface interne du premier côté,
- la pale de rotor (20) comprend un second élément structurel (32), qui est raccordé de manière mobile à la surface interne du second côté,
- le premier et le second élément structurel (31, 32) sont raccordés de manière mobile l'un à l'autre, et
- le premier côté et le second côté sont configurés de manière que les formes respectives peuvent être modifiées de manière passive dépendamment d'un mouvement du second élément structurel (32) par rapport au premier élément structurel (31), dans lequel
le second élément structurel (32) est attaché à la surface interne du second côté d'une manière telle qu'il peut réaliser un mouvement pivotant, dans lequel
dû au mouvement du second élément structurel (32) par rapport au premier élément structurel (31), la cambrure de la pale de rotor (20) est réduite lorsque la charge sur la portion de profil de pale (29) de la pale de rotor (20) est augmentée.

2. Pale de rotor (20) selon la revendication 1,
**caractérisée en ce que** le mouvement du second élément structurel (32) par rapport au premier élément structurel (31) est amené au moins parmi entre autre par une déflexion dans le sens du battement de la portion de profil de pale (29) de la pale de rotor (20).

3. Pale de rotor (20) selon l'une quelconque des revendications précédentes,
**caractérisée en ce que** le premier et le second élément structurel (31, 32) sont raccordés de manière mobile au moyen d'une articulation (33).

4. Pale de rotor (20) selon l'une quelconque des revendications précédentes,
**caractérisée en ce que** le premier élément structurel (31) et/ou le second élément structurel (32) sont agencés au niveau de la section de bord de fuite (241) de la pale de rotor (20).

5. Pale de rotor (20) selon l'une quelconque des revendications précédentes,
**caractérisée en ce que** le premier élément structurel (31) est raccordé de manière rigide à la surface interne du premier côté au moyen d'une section de ligne de colle étendue (312).

6. Pale de rotor (20) selon l'une quelconque des revendications précédentes,
**caractérisée en ce que** le premier élément structurel (31) est raccordé de manière rigide à la surface interne du premier côté après ou lors de la fabrication du premier côté.

7. Pale de rotor (20) selon la revendication 6,
**caractérisée en ce que** le premier élément structurel (31) est raccordé de manière rigide à la surface interne du premier côté lors de la fabrication du premier côté, en particulier lors d'un processus de moulage thermique rapide sous vide.

8. Pale de rotor (20) selon l'une quelconque des revendications précédentes,
**caractérisée en ce que**
- le premier côté est au moins une portion du côté pression (28) de la portion de profil de pale (29), et
- le second côté est au moins une portion du côté aspiration (27) de la portion de profil de pale (29).

9. Pale de rotor (20) selon l'une quelconque des revendications précédentes,
**caractérisée en ce que**
- la portion de profil de pale (29) comprend une coque définissant le contour du profil de profil de pale de la portion de profil de pale (29),
- le premier côté est une portion de la coque, et
- le second côté est une autre portion de la coque.

10. Éolienne pour générer de l'électricité comprenant au moins une pale de rotor (20) selon l'une quelconque des revendications précédentes.
